(19) Europäisches Patentamt
European Patent Office
Office européen des brevets

(11) Publication number: **0 269 346 B1**

(12) # EUROPEAN PATENT SPECIFICATION

(45) Date of publication of patent specification: **18.12.91**

(51) Int. Cl.[5]: **C08G 18/66**, C08G 18/65, C08J 9/30, D06N 3/14

(21) Application number: **87310117.4**

(22) Date of filing: **17.11.87**

Divisional application 88202975.4 filed on 17/11/87.

The file contains technical information submitted after the application was filed and not included in this specification

(54) **Polyurethane froth foam.**

(30) Priority: **19.11.86 GB 8627658**
**06.08.87 GB 8718636**

(43) Date of publication of application:
**01.06.88 Bulletin 88/22**

(45) Publication of the grant of the patent:
**18.12.91 Bulletin 91/51**

(84) Designated Contracting States:
**AT BE DE ES FR GB IT LU NL SE**

(56) References cited:
**GB-A- 1 460 863**
**GB-A- 2 041 387**
**US-A- 3 580 869**
**US-A- 4 517 383**

(73) Proprietor: **POLYOL INTERNATIONAL B.V.**
**Aert van Nesstraat 45, Postbus 1310**
**Rotterdam(NL)**

(72) Inventor: **Berthevas, Paul Rene BP Chemicals (Suisse) SA**
**11-13 Rue de Veyrot Box 149**
**CH-1217 Meyrin 2(CH)**
Inventor: **Fanget, Alain Fracois BP Chemicals (Suisse) SA**
**11-13 Rue de Veyrot Box 149**
**CH-1217 Meyrin 2(CH)**

(74) Representative: **Raynor, John et al**
**W.H. Beck, Greener & Co 7 Stone Buildings**
**Lincoln's Inn**
**London WC2A 3SZ(GB)**

**EP 0 269 346 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to novel polyurethane froth foams for use as a backing for coverings such as carpets or upholstery. In particular, the invention relates to novel polyurethane froth foams which can be formed or moulded into shape when hot and which retain their shape when cold.

The production of polyurethane froth foams, for use as a backing for coverings such as carpets, artificial grass, sports surfaces and the like, is a known process. Such polyurethane froth foams can be prepared, for example, by mixing a two-component reactive polyurethane-foaming mixture with an inert gas (i.e. nitrogen, air etc), under froth-generating conditions of high shear, usually in the presence of catalysts and froth stabilisers. The polyurethane-forming mixture is chosen so that it reacts slowly thereby allowing ample time for a froth to be formed in the mixer.

Once the polyurethane froth has been formed it is usually contacted, in an uncured state, with an appropriate covering substrate, e.g. vinyl sheet, textile tufts, etc. to produce the finished foam backed covering. The finished foam backed covering is then cured at elevated temperature. A typical example of this process has been described in detail in Cellular Polymers Vol. 4, pages 179-183 (1985).

Foamed backed coverings produced by the process described above are flexible but exhibit no shape retention. For some applications however, for example in the automotive industry, there is a demand for coverings which show shape retention at ambient temperatures but which are thermoformable, i.e. mouldable or formable at elevated temperatures. Such materials have the advantage that they can be bought or manufactured in sheet form and subsequently thermoformed into the complex shapes required to cover the interiors of automobiles.

One approach to rendering such coverings thermoformable is to incorporate into the covering a thermoplastic rigid polymer such as a polypropylene, a polyester, a polyamide or a polycarbonate. This can be done for example by bonding a sheet or a non-woven fleece of the thermoplastic rigid polymer to the covering or by incorporating a thermoplastic rigid polymer in powder form into the polyurethane froth foam.

A new method of rendering polyurethane froth foamed backed coverings thermoformable has now been discovered which avoids the need to use a thermoplastic material. The new method involves modifying the structure of the polyurethane by incorporating into the polyurethane froth foam forming mixture one or more chain extenders which render the cured polyurethane froth foam thermoformable whilst at the same time keeping it sufficiently stiff at ambient temperatures to give good shape retention.

Accordingly, the present invention provides a process for the manufacture of a thermoformable polyurethane froth foam which process comprises contacting a polyurethane forming formulation with an inert gas under conditions which produce a froth of the polyurethane forming formulation characterised in that the polyurethane forming formulation comprises a polyfunctional isocyanate, a polyfunctional alcohol, and a chain extender which is an aromatic amine having the formula I

FORMULA I

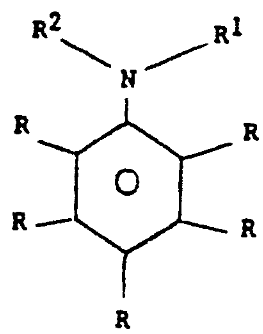

wherein the R groups are independently selected from hydrogen groups and the $R^1$ and $R^2$ groups are independently selected from hydrogen, hydroxy functionalised alkyl groups or hydroxy functionalised poly-(oxyalkylene) groups; with the proviso that $R^1$ and $R^2$ are not both hydrogen.

The function of the chain extender is to render the final cured polyurethane froth foam thermoformable. In principle any aromatic amine defined by the formula I can be used. However, it is usually desirable to select an aromatic amine which does not itself catalyse the polyurethane forming reaction otherwise the formulation may harden before it has been frothed or applied to the appropriate covering substrate. It is for this reason that using aromatic amines of the above formula where both $R^1$ and $R^2$ are hydrogen is excluded.

The hydroxy functionalised alkyl groups may be of the formula $-(CHR)_nOH$ where n is an integer between 1 and 20 and the hydroxy functionalised poly(oxyalkylene) groups may be of formula $-(CH_2CH_2O)_m(CH_2CH(CH_3)O)_pH$ where m and p are independently zero or an integer between 1 and 6. The oxyethylene and oxypropylene groups may be arranged randomly or in a block form in such groups. Suitable groups include $-(CH_2)_2OH$ groups, $-CH_2CH(CH_3)OH$ groups, $-(CH_2CH_2)O_qH$ and $-(CH_2CH(CH_3)O_qH$ (where q is either 2 or 3) groups and the like. Preferably the alkoxy group is either $-CH_2CH_2OH$ or $-(CH_2CH_2O)_2H$.

Although the aromatic amine can be used pure it will be appreciated that during the preparation of such materials, which typically involve alkoxylating the corresponding amine, a mixture of products alkoxylated to differing levels are produced. Such mixtures of the aromatic amines can also be used in the process of the invention. Of course when such mixtures are used the values of the integers m, n, p and q as measured by standard techniques will assume an averaged value which may be non-integer.

As regards the R groups, these are independently selected from hydrogen or alkyl groups. Preferably the R groups are either hydrogens or $C_1$ to $C_4$ alkyl groups.

A preferred aromatic amine is a mixture corresponding to the averaged formula

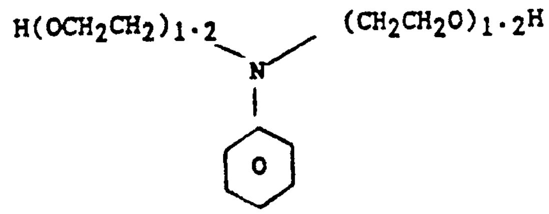

In our divisional application No. we describe processes similar to those described herein in which the chain extender is an alkoxylated bisphenol A, preferably one alkoxylated with between 1 and 6 moles of either ethylene oxide, propylene oxide or mixtures thereof per mole of bisphenol A.

Polyurethane froth foam formulations containing the chain extender of the present invention produce cured froth foams with a satisfactory degree of shape retention at or near room temperature and which are thermoformable at temperatures below 200 °C. Such cured froth foams when heated can be easily thermoformed by the action of mechanical or vacuum pressing.

Whilst the cured froth foams described above have the advantage that they are easily thermoformed and have adequate shape retention characteristics, it has also been found that the shape retention characteristics can be further improved by having a second chain extender present in the froth foam formulation.

Accordingly, in a preferrred aspect of the present invention there is provided a process for the manufacture of a polyurethane froth foam which process comprises contacting a polyurethane forming formulation with an inert gas under conditions which produce a froth of the polyurethane formulation characterised in that the polyurethane forming formulation comprises a polyfunctional isocyanate, a polyfunctional alcohol, a chain extender as described above and a second chain extender comprising a linear glycol.

The effect of the second chain extender is to improve the rigidity and hence shape retention of the cured froth foam. Suitable examples of linear glycols include, monoethylene glycol, monopropylene glycol, diethylene glycol, dipropylene glycol and the like. Most preferred is monoethylene glycol.

Since the two chain extenders influence the properties of the cured froth foam in different ways it will be appreciated that the properties of the final foam will be influenced by (a) the relative proportions of the two, and (b) the absolute proportions of each in the polyurethane foam forming formulation.

Considering first the relative proportions of the two chain extenders, it can be said that in general the higher the proportion of the linear glycol relative to the aromatic amine the better the shape retention and the worse the thermoformability of the cured foam. Hence for most applications there is a compromise between having good shape retention and having a cured foam which is thermoformable at a temperature below which thermal degradation of the foam occurs.

As regards the absolute levels of the two chain extenders, the more second chain extender there is present, the more shape retentive the final product will be whilst the more first chain extenders there is present the easier it will be to thermoform the product. Preferably, each chain extender is present in amounts corresponding to less than 20% by weight of the polyfunctional alcohol used.

As mentioned earlier, it is desirable that the cured polyurethane foam should be thermoformable at a temperature below which thermal degradation occurs. In practice this means that the polyurethane foam

should be thermoformable at a temperature of less than 200 ° C, preferably in the range 130-180 ° C.

The polyfunctional isocyanates which can be used in the present process will be known to those skilled in the art. Suitable examples include individual or mixtures of the isomers of aromatic diisocyanates such as toluene diisocyanate (TDI), xylene diisocyanates and the like; difunctional aliphatic or cycloaliphatic isocyanates having between 2 and 18 carbon atoms, preferably 4-12 carbon atoms and isomers and oligomers of di(4-isocyantophenyl) methane (MD1). Preferably the polyfunctional isocyanate is MDI, an MDI prepolymer, an MDI variant, or a mixture thereof. In addition to the above, prepolymers of polyfunctional isocyanates and polyfunctional alcohols or amines can be used.

Although the polyfunctional polyol used can be any alcohol having two or more reactive hydroxyl groups it is suitably a polyether polyol. The term polyether polyol, which is well known in the art, includes alkylene oxide adducts of (1) low molecular weight diols and triols or naturally occurring polyols (2) non reducing sugars and derivatives thereof (3) phosphoric, phosphorous, and polyphosphoric acids. Examples of such adducts are the alkylene oxide adducts of ethylene glycol, propylene glycol, glycerol, trimethylol propane, the isomeric butanediols, hexanediols, octanediols and the like. Alkylene oxide adducts of pentaerythritol, sorbitol, arabitol, mannitol, alkyl glucoside, alkylene glycol glucosides and glycerol glucosides are also contemplated, as are adducts of alkylene diamines and hydrazines.

In general it is desirable that the alkylene oxide used to form the adduct is a lower alkylene oxide having from 2 to 4 carbon atoms. Preferred examples are ethylene oxide, propylene oxide, the butylene oxides or mixtures thereof.

Polyether polyols containing additional polymeric matter, e.g. polymer polyols, may also be employed. Mixtures of polyether polyols or mixtures of polyether polyols and polymer polyols can be used.

When both chain extenders are used for balanced thermoformability and shape retention, a mixture of polyfunctional alcohols and polymer polyols is tailored to obtain the desired mechanical properties of the final froth foam. When emphasis is placed upon easy thermoformability, e.g. for vacuum forming applications, the first chain extender is used as above together with small amounts of ethylene glycol and the polyfunctional alcohols are preferably diols together with higher functionality polyfunctional alcohols and/or polymer polyols used in smaller amounts as required to obtain the correct mechanical properties.

In addition to the components described above, the polyurethane froth foam formulation may also contain other additives (e.g. surfactants, catalysts, fillers, etc.) which are routinely used in making froth foams.

The polyurethane forming formulations of the present invention can be frothed using standard techniques, coated on to an appropriate covering substrate and thereafter cured. It has been found that polyurethane froth foam backed coverings containing the additives described above, and in particular those produced according to the present invention, show particularly good shape retention/thermoformability properties without the weight and processing disadvantages of prior art materials. This is particularly so when the thickness of the polyurethane froth foam is less than 0.5 cm.

The invention is now illustrated by the following Examples.

Examples 1-6

Six polyurethane foam formulations were prepared according to the compositions given in Table 1. Each formulation was frothed with air in a Mondomix Mixer 'T-Model' and knife coated on to release paper. Each froth coating was then cured in an oven at 150 ° for 5 minutes to form a frothed elastomer sheet of 0.35 cm thickness. The thermoformability and shape retention at ambient and 80 ° C of each were measured. The results are given in Table 1.

Polyurax polyol PPG 2025 = 2000 MW polypropylene glycol (ex BP Chemicals).

Polyurax polyol U20022 = Polymer polyol ca 20% by weight 50/50 styrene acrylonitrile copolymer in 5000 MW polyether polyol CP-3 (ex BP Chemicals).

Niax chain extender HL 565 = 1 mole of aniline ethoxylated with 2.4 moles of ethylene oxide (ex Union Carbide Corporation).

Polurax RA 4006 = Quaternised fatty amine salt (ex BP Chemicals).

Example 7

A further polyurethane froth formulation was prepared according to the composition given in Table 2. Isonol 100 (ex Dow Chemical) was used as the aromatic amine.

The formulation was treated as for Examples 1 to 6 and a 0.35 cm thick frothed elastomer sheet produced. The results of the thermoformability and shape retention tests are also given in Table 2.

Isonol 100 = 1 mole of aniline propoxylated with 2 moles of propylene oxide.

Example 8

A polyurethane froth foam formulation comprising:

| | part by weight |
|---|---|
| Polyurax PPG 20.25 (polypropylene glycol M.V. = 2000) | 84 |
| Niax chain extender HL 565 (ex UCC) | 15 |
| Polyurax RA 4006 (ex BP Chemicals) | 1 |
| Polyurax SF 114 (silicone surfactant ex BP Chemicals) | 1 |
| Polyurax CF 116 (catalyst ex BP Chemicals) | 2 |
| Barium Sulphate | 350 |
| Polyurax Isocyanate IS 5 (ex BP Chemicals) | 42 |

was prepared and frothed in a Mondomix Mixer 'T-model' and knife coated on to release paper as described in Example 1.

The resulting foam was vacuum formable at 170°C and exhibited satisfactory shape retention at ambient temperature.

The terms 'Mondomix', 'Polyurax', 'Niax', 'Isonol' and 'Dionol' are registered Trade Marks.

The shape retention and thermoformability tests have been described recently in the SPI-FSK proceedings (Aachen) 'Polyurethane World Congress' - Oct. 1987 - paper by P. Berthevas, A. Fanget and G. Catouillat. However tests to demonstrate such problems can easily be developed by those skilled in the art.

**TABLE 1**

| Formulation (parts per hundred parts of polyol blend) | EXAMPLE 1 | 2 | 3 | 4 | 5 | 6 |
|---|---|---|---|---|---|---|
| Polyurax Polyol PPG 2025 | 70 | 70 | 67 | 66 | 64 | 65 |
| Polyurax Polyol U 2202 | 20 | 20 | 20 | 20 | 20 | 20 |
| Niax Chain Extender HL 565 (ex UUC) | 4 | 5 | 5 | 6.5 | 9.5 | 7 |
| Monoethylene Glycol | 4 | 5 | 7 | 6.5 | 5.5 | 7 |
| Polyurax Additive RA4006 | - | - | 1 | 1 | 1 | 1 |
| Polyurax Silicone Surfactant SF114 | 1 | 1 | 1 | 1 | 1 | 1 |
| Polyurax Catalyst CF115 | 1 | 1 | 1 | 1 | 1 | 1 |
| Barium Sulphate | 300 | 300 | 300 | 300 | 300 | 300 |
| Polyurax Isocyanate IS-5 | 44 | 51.4 | 63.7 | 63.1 | 62.5 | 66.6 |
| Froth Cup Density (g/l) | 1350 | 1300 | 1350 | 1350 | 1350 | 1350 |
| Cured Froth Density (g/l) | 900 | 900 | 900 | 900 | 900 | 900 |
| Thermoformability ($150^oC$/5 mins) | | | | | | |
| Open U-shaped | 10/10 | 10/10 | 10/10 | 10/10 | 10/10 | 10/10 |
| Closed U-shaped | 10/10 | 10/10 | 10/10 | 10/10 | 10/10 | 10/10 |
| Shape Retention | | | | | | |
| Open U-shaped (ambient) | 5/10 | 5/10 | 6/10 | 7/10 | 8/10 | 8/10 |
| Closed U-shaped (ambient) | 7/10 | 7/10 | 8/10 | 8/10 | 8/10 | 8/10 |
| Open U-shaped ($80^oC$) | 2/10 | 2/10 | 3/10 | 5/10 | 4/10 | 6/10 |
| Closed U-shaped ($80^oC$) | 5/10 | 5/10 | 6/10 | 6/10 | 6/10 | 8/10 |

**TABLE 2**

| | EXAMPLE |
|---|---|
| Formulation (parts per hundred parts of polyol blend) | 7 |
| Polyurax Polyol PPG 2025 | 67 |
| Polyurax Polyol U 2202 | 20 |
| Monoethylene Glycol | 7 |
| Isonol 100 (ex Dow Chemical) | 5 |
| Dionol 220 (ex Akzo Chemie) | - |
| Polyurax Additive RA 4006 | 1 |
| Polyurax Silicone Surfactant SF114 | 1 |
| Polyurax Catalyst CF115 | 1 |
| Barium Sulphate | 300 |
| Polyurax Isocyanate IS-5 | 63.2 |
| Froth Cup Density (g/l) | 1400 |
| Cured Froth (g/l) | 950 |
| Thermoformability (150°C/5 mins) | |
| Open U-shaped | 10/10 |
| Closed U-shaped | 10/10 |
| Shape Retention | |
| Open U-shaped (ambient) | 3/10 |
| Closed U-shaped (ambient) | 5/10 |
| Open U-shaped (80°C) | 1/10 |
| Closed U-shaped (80°C) | 3/10 |

## Claims

**1.** A process for the manufacture of a thermoformable polyurethane froth foam which process comprises contacting a polyurethane forming formulation with an inert gas under conditions which produce a froth of the polyurethane forming formulation characterised in that the polyurethane forming formulation comprises a polyfunctional isocyanate, a polyfunctional alcohol and a chain extender which is an aromatic amine having the formula

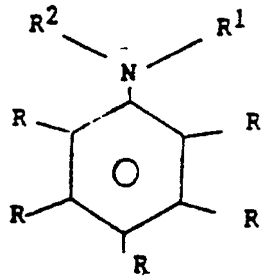

wherein the R groups are independently selected from hydrogen or alkyl groups and the $R^1$ and $R^2$ groups are independently selected from hydrogen, hydroxy functionalised alkyl groups or hydroxy functionalised poly(oxyalkylene) groups; with the proviso that $R^1$ and $R^2$ are not both hydrogen.

2. A process as claimed in Claim 1, characterised in that at least one of $R^1$ and $R^2$ is a hydroxy functionalised alkyl group.

3. A process as claimed in Claim 1, characterised in that at least one of $R^1$ and $R^2$ is a hydroxy functionalised alkyl group having the formula $-(CH_2)_n$ OH, where n is an integer between 1 and 20, or an hydroxy functionalised poly(oxyalkylene) group of the formula - $(CH_2CH_2O)_m(CH_2CH(CH_3)O)_pH$ where m and p are independently zero or an integer between 1 and 6.

4. A process as claimed in Claim 3, characterised in that at least one of $R^1$ and $R^2$ is a group selected from the group consisting of $-(CH_2)_2OH$, $-CH_2CH(CH_3)OH$, $-(CH_2CH_2O)_qH$ and $-(CH_2CH(CH_3)O)_qH$ where $_q$ is either 2 or 3.

5. A process as claimed in Claim 1, characterised in that the aromatic amine is a mixture corresponding to the average formula

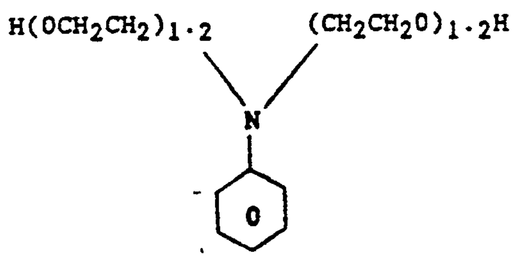

6. A process as claimed in any preceding claim, characterised in that the polyurethane forming formulation further comprises, as a second chain extender, a linear glycol.

7. A process as claimed in Claim 6, characterised in that the linear glycol is selected from the group consisting of monoethylene glycol, monopropylene glycol, diethylene glycol and dipropylene glycol.

8. A process as claimed in any preceding claim, characterised in that the aromatic amine chain extender comprises up to 20% by weight of the total polyfunctional alcohol used.

9. A process as claimed in Claim 6, characterised in that the second chain extender comprises up to 20% by weight of the total polyfunctional alcohol used.

10. A process as claimed in any preceding claim, characterised in that the polyfunctional alcohol is a diol.

11. A mixture consisting essentially of (a) up to 20% by weight of a chain extender as defined in Claim 1, (b) up to 20% of a second chain extender as defined in Claim 6 and (c) one or more polyfunctional alcohols.

12. A polyurethane froth foam backed covering comprising a covering substrate bonded to a layer of cured polyurethane froth foam produced by a process as claimed in any one of Claims 1 to 10.

13. A polyurethane froth foam backed covering comprising a covering substrate bonded to a layer of cured polyurethane froth foam containing in reacted form up to 20% by weight of a chain extender as defined in Claim 1.

14. A polyurethane froth foam backed covering comprising a covering substrate bonded to a layer of cured polyurethane froth foam containing in reacted form up to 20% by weight of the chain extender as defined in Claim 6.

15. A polyurethane froth foam backed covering as claimed in any of Claims 12 to 14, characterised in that the layer of cured polyurethane froth foam is less than 0.5 cm thick.

16. A process for preparing a polyurethane froth foam backed covering which comprises coating a covering substrate with a layer of froth of a polyurethane forming formulation as defined in any one of Claims 1 to 10 and thereafter curing the froth.

## Revendications

1. Procédé de fabrication d'une mousse de polyuréthane thermoformable, le procédé consistant à mettre une formulation de formation de polyuréthane au contact d'un gaz inerte dans des conditions conduisant à la production d'une mousse de la formulation de formation de polyuréthane, caractérisé en ce que la formulation de formation de polyuréthane se compose d'un polyisocyanate, d'un polyol et d'un agent d'allongement de chaîne qui est une amine aromatique de formule.

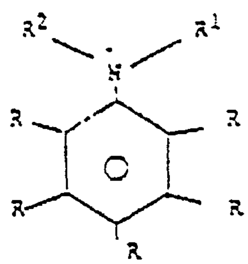

dans laquelle les groupes R sont sélectionnés indépendamment parmi l'atome d'hydrogène et les groupes alkyle, et les groupes $R^1$ et $R^2$ sont sélectionnés indépendamment parmi l'atome d'hydrogène, les groupes alkyle à fonction hydroxyle et les groupes poly(oxyalkylène) à fonction hydroxyle; à condition que $R^1$ et $R^2$ ne soient pas tous les deux des atomes d'hydrogène.

2. Procédé selon la revendication 1, caractérisé en ce qu'au moins $R^1$ ou $R^2$ est un groupe alkyle à fonction hydroxyle.

3. Procédé selon la revendication 1, caractérisé en ce qu'au moins $R^1$ ou $R^2$ est un groupe alkyle à fonction hydroxyle de formule $-(CH_2)_nOH$, où n est un nombre entier compris entre 1 et 20, ou un groupe poly (oxyalkylène) à fonction hydroxyle de formule $-(CH_2CH_2O)_m(CH_2CH(CH_3)O)_pH$ où m et p valent indépendamment zéro ou un nombre entier compris entre 1 et 6.

4. Procédé selon la revendication 3, caractérisé en ce qu'au moins $R^1$ ou $R^2$ est un groupe sélectionné dans l'ensemble composé de $-(CH_2)_2OH$, $-CH_2CH(CH_3)OH$, $-(CH_2CH_2O)_qH$ et $-(CH_2CH(CH_3)O)_qH$, où q est égal soit à 2, soit à 3.

5. Procédé selon la revendication 1, caractérisé en ce que l'amine aromatique est un mélange correspondant à la formule moyenne

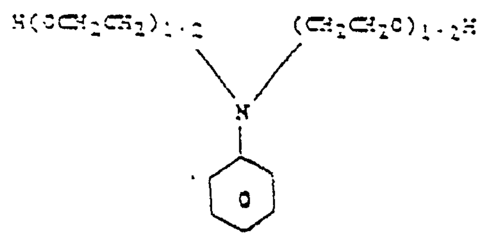

6. Procédé selon l'une quelconque des revendications précédentes, caractérisé en ce que la formulation de formation de polyuréthane comprend en outre, en tant que second agent d'allongement de chaîne, un glycol linéaire.

7. Procédé selon la revendication 6, caractérisé en ce que le glycol linéaire est sélectionné dans l'ensemble composé des monoéthylèneglycol, monopropylèneglycol, diéthylèneglycol et dipropylèneglycol.

8. Procédé selon l'une quelconque des revendications précédentes, caractérisé en ce que l'amine aromatique utilisée comme agent d'allongement de chaîne constitue jusqu'à 20 % en poids du total des polyols utilisés.

9. Procédé selon la revendication 6, caractérisé en ce que le second agent d'allongement de chaîne constitue jusqu'à 20 % en poids du total des polyols utilisés.

10. Procédé selon l'une quelconque des revendications précédentes, caractérisé en ce que le polyol est un diol.

11. Mélange se composant essentiellement de (a) jusqu'à 20 % en poids d'un agent d'allongement de chaîne tel que défini dans la revendication 1, (b) jusqu'à 20 % d'un second agent d'allongement de chaîne tel que défini dans la revendication 6 et (c) d'un ou plusieurs polyols.

12. Couverture à dos en mousse de polyuréthane, comprenant un substrat de couverture lié à une couche de mousse de polyuréthane durcie, produite à l'aide d'un procédé selon l'une quelconque des revendications 1 à 10.

13. Couverture à dos en mousse de polyuréthane, comprenant un substrat de couverture lié à une couche de mousse de polyuréthane. durcie contenant, sous la forme d'un produit de réaction, jusqu'à 20 % en poids d'un agent d'allongement de chaîne tel que défini dans la revendication 1.

14. Couverture à dos en mousse de polyuréthane, comprenant un substrat de couverture lié à une couche de mousse de polyuréthane durcie contenant, sous la forme d'un produit de réaction, jusqu'à 20 % en poids d'un agent d'allongement de chaîne tel que défini dans la revendication 6.

15. Couverture à dos en mousse de polyuréthane telle que définie dans l'une quelconque des revendications 12 à 14, caractérisée en ce que la couche de mousse de polyuréthane durcie a une épaisseur inférieure à 0,5 cm.

16. Procédé de préparation d'une couverture à dos en mousse de polyuréthane, consistant à revêtir un substrat de couverture d'une couche de mousse d'une formulation de formation de polyuréthane, telle que définie dans l'une quelconque des revendications 1 à 10, et à faire durcir ensuite la mousse.

**Patentansprüche**

1. Verfahren zur Herstellung eines wärmeformbaren Polyurethanschaums umfassend, daß man eine polyurethanbildende Formulierung mit einem Inertgas unter solchen Bedingungen in Kontakt bringt, daß ein Schaum der polyurethanbildenden Formulierung entsteht,

**dadurch gekennzeichnet,** daß die polyurethanbildende Formulierung ein polyfunktionelles Isocyanat, einen polyfunktionellen Alkohol und einen Kettenverlängerer umfaßt, der ein aromatisches Amin mit der Formel

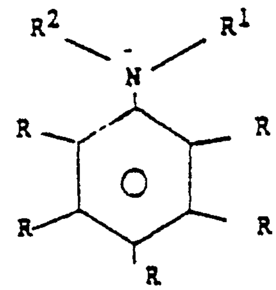

ist, worin die Gruppen R unabhängig ausgewählt sind aus Wasserstoff- oder Alkylgruppen und die Gruppen $R^1$ und $R^2$ unabhängig ausgewählt sind aus Wasserstoff, Hydroxyalkylgruppen oder Hydroxypoly(oxyalkylen)gruppen; mit dem Vorbehalt, daß $R^1$ und $R^2$ nicht beide Wasserstoff sein können.

2. Verfahren nach Anspruch 1,
**dadurch gekennzeichnet,** daß mindestens einer der Reste $R^1$ und $R^2$ eine Hydroxyalkylgruppe ist.

3. Verfahren nach Anspruch 1,
**dadurch gekennzeichnet,** daß mindestens einer der Reste $R^1$ und $R^2$ eine Hydroxyalkylgruppe mit der Formel $-(CH_2)_nOH$ ist, worin n eine ganze Zahl von 1 bis 20 ist oder eine Hydroxypoly(oxyalkylen)-gruppe der Formel $-(CH_2CH_2O)_m(CH_2CH(CH_3)O)_pH$, worin m und p unabhängig O oder eine ganze Zahl von 1 - 6 sind.

4. Verfahren nach Anspruch 3,
**dadurch gekennzeichnet,** daß mindestens einer der Reste $R^1$ und $R^2$ eine Gruppe ist, ausgewählt aus der Gruppe bestehend aus $-(CH_2)_2OH$, $-CH_2CH(CH_3)OH$, $-(CH_2CH_2O)_qH$ und $-(CH_2CH(CH_3)O)_qH$ worin q entweder 2 oder 3 ist.

5. Verfahren nach Anspruch 1,
**dadurch gekennzeichnet,** daß das aromatische Amin. eine Mischung mit der durchschnittlichen Formel:

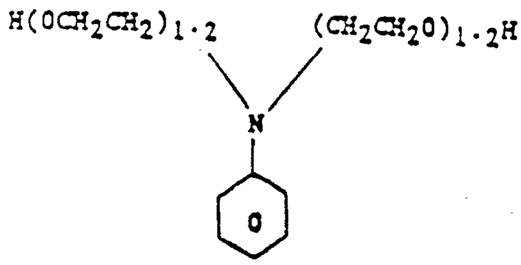

ist.

6. Verfahren nach einem der vorhergehenden Ansprüche,
**dadurch gekennzeichnet,** daß die polyurethan-bildende Formulierung als zweiten Kettenverlängerer ein lineares Glykol umfaßt.

7. Verfahren nach Anspruch 6,
**dadurch gekennzeichnet,** daß das lineare Glykol ausgewählt ist aus der Gruppe bestehend aus Monoethylenglykol, Monopropylenglykol, Diethylenglykol und Dipropylenglykol.

8. Verfahren nach einem der vorhergehenden Ansprüche, **dadurch gekennzeichnet,** daß der aromatische Amin-Kettenverlängerer bis zu 20 Gew.% des gesamten verwendeten polyfunktionellen Alkohols umfaßt.

9. Verfahren nach Anspruch 6, **dadurch gekennzeichnet,** daß der zweite Kettenverlängerer bis zu 20 Gew.% des gesamten verwendeten polyfunktionellen Alkohols umfaßt.

10. Verfahren nach einem der vorhergehenden Ansprüche, **dadurch gekennzeichnet,** daß der polyfunktionelle Alkohol ein Diol ist.

11. Mischung bestehend im wesentlichen aus (a) bis zu 20 Gewichts-prozent eines in Anspruch 1 definierten Kettenverlängerers, (b) bis zu 20% eines zweiten Kettenverlängerers, wie in Anspruch 6 definiert und (c) einem oder mehreren polyfunktionellen Alkoholen.

12. Verkleidung mit einer Polyurethanschaumverstärkung umfassend ein Verkleidungssubstrat, das an eine Schicht eines gehärteten Polyurethanschaums gebunden ist, der durch ein Verfahren nach einem der Ansprüche 1 bis 10 hergestellt wurde.

13. Verkleidung mit einer Polyurethanschaumverstärkung umfassend ein Verkleidungssubstrat, das an eine Schicht eines gehärteten Polyurethanschaums gebunden ist, der in unmgesetzter Form bis zu 20 Gew.% eines Kettenverlängerers nach Anspruch 1 enthält.

14. Verkleidung mit einer Polyurethanschaumverstärkung umfassend ein Verkleidungssubstrat, das an eine Schicht eines gehärteten Polyurethanschaums gebunden ist, der in umgesetzter Form bis zu 20 Gew.% des Kettenverlängerers nach Anspruch 6 enthält.

15. Verkleidung mit Polyurethanschaumverstärkung nach einem der Ansprüche 12 bis 14, **dadurch gekennzeichnet,** daß die Schicht aus gehärtetem Polyurethanschaum weniger als 0,5 cm dick ist.

16. Verfahren zur Herstellung einer Verkleidung mit einer Polyurethanschaum-verstärkung umfassend, daß man ein Verkleidungssubstrat mit einer Schicht eines Schaums einer polyurethanbildenden Formulierung nach einem der Ansprüche 1 - 10 beschichtet und anschließend den Schaum härtet.